# EUROPEAN PATENT SPECIFICATION

(11) **EP 2 715 961 B1**
(45) Date of publication and mention of the grant of the patent: **09.01.2019**
(21) Application number: 12793603.7
(22) Date of filing: 04.06.2012
(51) Int. Cl.: G09C 1/00, H04L 9/06

(54) **METHOD AND SYSTEM FOR A PROGRAMMABLE PARALLEL COMPUTATION AND DATA MANIPULATION ACCELERATOR**
VERFAHREN UND SYSTEM FÜR EINEN PROGRAMMIERBAREN PARALLELBERECHNUNGS- UND DATENMANIPULATIONSBESCHLEUNIGER
PROCÉDÉ ET SYSTÈME POUR UN CALCUL EN PARALLÈLE PROGRAMMABLE ET ACCÉLÉRATEUR DE MANIPULATION DE DONNÉES

(30) Priority: 03.06.2011 US 201161493172 P
(43) Date of publication of application: 09.04.2014
(73) Proprietor: Exelis Inc., Herndon, VA 20171 (US)
(72) Inventor: COLLINS, Michael, D., Colorado Springs, CO 80918 (US); NOEHRING, Lee, P., Phoenix, AZ 85310 (US); DOI, Bryan, Chandler, AZ 85142 (US)
(74) Representative: Viering, Jentschura & Partner mbB Patent- und Rechtsanwälte
(86) International application number: PCT/US2012/040689
(87) International publication number: WO 2012/167231

(56) References cited:
- US-A1- 2007 255 849
- US-A1- 2009 138 534
- US-A1- 2010 106 944
- Yedidya Hilewitz: "Advanced bit manipulation instructions: Architecture, implementation and applications", , 1 September 2008 (2008-09-01), XP055208945, ISBN: 978-0-54-984796-0 Retrieved from the Internet: URL:http://ddod.riss.kr/ddodservice/search /viewDetailThesisInfoForm.jsp?p_no=1188696 6&p_abstract_yn=Y&p_toc_yn=N&p_fulltext_ki nd=002&p_search=&p_k2dockey [retrieved on 2015-08-21]
- NIST (NATIONAL INSTITUE OF STADARDS AND TECHNOLOGY: "FIPS PUB 46-3 : Data Encryption Standard (DES)", INTERNET CITATION, 25 October 1999 (1999-10-25), XP002184357, Retrieved from the Internet: URL:http://csrc.nist.gov/publications/fips /fips46-3/fips46-3.pdf [retrieved on 2001-10-10]
- M. ASKAR ET AL: "Design and SystemC Implementation of a Crypto Processor for AES and DES Algorithms", INFORMATION SECURITY AND CRYPTOLOGY CONFERENCE ISC TURKEY, 13 December 2007 (2007-12-13), pages 145-149, XP055182390,
- Leemon C. Baird Iii ET AL: "ON EFFICIENT BIJECTIONS BETWEEN PERMUTATIONS AND FUNCTIONS", , 26 March 2006 (2006-03-26), XP055360539, Retrieved from the Internet: URL:http://www.leemon.com/papers/2007bc.pd f [retrieved on 2017-03-30]

## Description

### RELATED APPLICATIONS

### FIELD OF THE INVENTION

This generally relates to cryptographic calculations and more particularly to computational acceleration of general discrete mathematical operations.

### BACKGROUND

Modern cryptography, the practice and study of securing information, operates using algorithms which often require a large number of arithmetic computations of varying complexity. These cryptographic computations are essential to many security services such as authentication, confidentiality, and integrity.

A variety of algorithms are used to implement cryptographic functionality. Some of these algorithms contain complex arithmetic steps requiring comparatively long processing times. Conventional cryptographic algorithm acceleration methods typically attempt to accelerate one particular cryptographic algorithm at a time through specially designed hardware interfaced with software through a custom set of instructions programmed into a processor. Therefore, while conventional methods focus on a particular algorithm, conventional systems are not designed to have the general capability to accelerate multiple different algorithms using a single method or system.

Some recent research has attempted to identify generic acceleration instructions which are independent of any algorithm. However, they lack tight integration within the processing environment, and they lack the computational power for significant improvements in the computational efficiency of the algorithm.
In "Advanced bit manipulation instructions: Architecture, implementation and applications", by Yedidya Hilewitz, September 1, 2008, it is proposed to support bit manipulation operations in microprocessors, in particular fast bit gather, bit scatter and bit matrix multiply instructions. The implementation of bit gather and bit scatter instructions by butterfly and inverse butterfly network datapaths is shown.
In "Design and SystemC Implementations of a Crypto Processor for AES and DES Algorithms" by M.Askar and T.Egemen, December 13, 2007 a programmable Crypto processor is implemented for AES, DES and TDES by using a SystemC tool. The architecture is similar to that of the general microcontroller's structure, but a permutation module, which is based on a butterfly and inverse butterfly network, is added to the architecture.

Encryption algorithms utilize the ability to mix, or "permute," incoming data by remapping the data, or portions thereof, to the output. Such mappings often separate the distinctive properties of diffusion and confusion to varying degrees. While conventional bit permuters which support diffusion related computations are located outside of the Arithmetic Logic Unit ("ALU"), the digital circuit that performs arithmetic and logic operations, rather than integrated within the ALU, Conventional acceleration circuits do not tightly couple and integrate both diffusion and confusion principles.

Many conventional systems maintain only one copy of each individual bit in a single location. Many acceleration strategies do this so that hardwired circuits can route multiple instances of those values to combinational logic efficiently. However, this hardwiring by its nature limits the general applicability of such circuits to a wide variety of algorithms.

Similarly, by only maintaining one copy of each bit, these systems ensure that where a bit is required for multiple calculations, the single copy of that bit may be only available to one calculation at a time, requiring the calculations to be performed in serial rather than in parallel, elongating processing time for the algorithm.

Further, maintaining a single copy of each individual bit in a conventional system located without tightly integrating its location within the computational circuitry forces additional software to preparations of the data input, slowing input/output ("I/O") processing associated with the desired computation.

By treating the required instruction set as a generic bit permuter, conventional systems offer limited capabilities and throughput speed. Finally, the lack of integration of diffusion related permutations with confusion related calculations requires the programmer to provide separate instructions to perform the actual computation increasing the input/output processing requirements, limiting the parallelization and pipe-lining potential, and wasting further time and man-hours.

Accordingly, there is a desire for a computation and data manipulation accelerator which overcomes these and other related problems.

### SUMMARY

A method is provided for accelerating a calculation of multiple different cryptographic algorithms and/or portions thereof in a single data processing system using programmable parallel computation and data manipulation, comprising inputting data bits into multiple registers to make duplicate copies of the inputted data bits to be input to a butterfly network, so that an individual bit may be used in multiple calculations in parallel; inputting the duplicate copies of the data bits into the butterfly network, and permuting the inputted data bits in the butterfly network. The method further comprises outputting the permuted data bits from the butterfly network to a look up table, and transforming the inputted permuted data bits in the look up table. The method also comprises outputting the transformed data bits from the look up table; wherein the butterfly
network and the lookup table are programmed by the user according to the algorithm the user desires to accelerate.

A data processing system is provided capable to accelerate a calculation of multiple different cryptographic protocols and/or portions thereof using programmable parallel computation and data manipulation, comprising a plurality of registers configured to input data bits to make duplicate copies of the data bits to be input to a butterfly network, so that an individual bit may be used in multiple calculations in parallel; and output the duplicate copies of the data bits to the butterfly network. The butterfly network is configured to input the duplicate copies of the data bits, permute the inputted data bits in the butterfly, and output the permuted data bits from the butterfly network to a look up table. The data processing system further comprises a look up table configured to input the permuted data bits from the butterfly network, transform the inputted permuted data bits in the look up table, and output the transformed data bits from the look up table; wherein the butterfly network and the lookup table are configured to be programmed by the user according to the algorithm the user desires to accelerate.

### BRIEF DESCRIPTION OF THE DRAWINGS

Figure 1 illustrates an exemplary embodiment of a programmable parallel computation and data manipulation accelerator made in accordance with methods and systems consistent with the present invention.
Figure 2 illustrates steps in an exemplary method for use of a programmable parallel computation and data manipulation accelerator in accordance with methods and systems consistent with the present invention.
Figure 3 illustrates steps in an exemplary alternate method for use of a programmable parallel computation and data manipulation accelerator in accordance with methods and systems consistent with the present invention.
Figure 4 illustrates steps in an exemplary alternate method for use of a programmable parallel computation and data manipulation accelerator in accordance with methods and systems consistent with the present invention.

### DETAILED DESCRIPTION

Methods and systems in accordance with the present invention provide a programmable parallel computation and data manipulation accelerator that may be used, for example, in cryptographic calculations. Methods and systems in accordance with the present invention allow acceleration of a broad variety of cryptographic algorithms and/or portions of algorithms, these methods and systems are not algorithm specific. This system comprises a butterfly and inverse butterfly multiplexing permuter network and a lookup table. In some implementations, this system may be implemented on an application specific integrated circuit ("ASIC") within the cryptographic development processing engine ("CDPE"). In some implementations, multiple processors may be arranged to a bank of instances of this assembly in a tightly integrated approach allowing all of the processors to accelerate portions of computations specific to their independent processes or to support coordinated parallelization of a particular algorithm.In some implementations, this system may allow replication of input registers, "expansion," so that an individual bit may be used in multiple calculations in parallel, accelerating completion of the cryptographic algorithm. In some implementations the system may allow "diffusion" of the expanded bits through the system's butterfly and inverse butterfly network. In some implementations the system may allow "confusion" of the resulting bits through the system's lookup table. In some implementations, the system may allow completion of a computation within an algorithm within one clock cycle, the time between two adjacent pulses of the oscillator that sets the tempo of the computer processor.

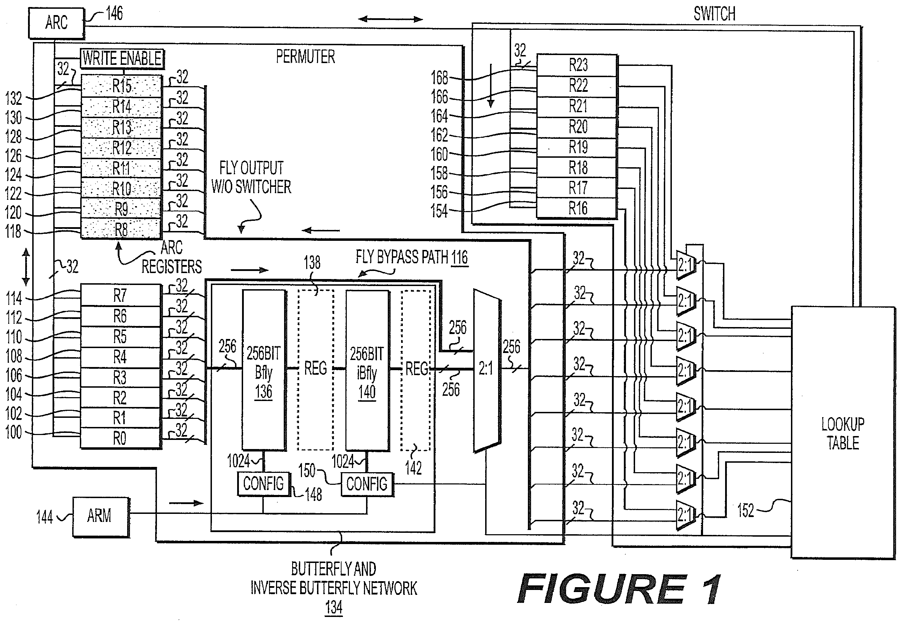

Figure 1 illustrates an exemplary embodiment of a programmable parallel computation and data manipulation accelerator made in accordance with methods and systems consistent with the present invention. It should be understood that the specific numbers of bits provided in the discussion of Figure 1 are used by way of example only, one of ordinary skill in the art will readily see that any suitable alternate numbers of bits may be used. The user may identify an algorithm which the user would like performed quicker. The algorithm may be, for example, a cryptographic algorithm such as the Advance Encryption Standard (AES), RC-4, or a hash algorithm such as MD-5, SHA-256, or a Cyclic Redundancy Check (CRC). Other algorithms may be used. The user may input the bits of this algorithm, for example as one 32 bit word, into the system using ARC 146, an embedded system processor. The input 32 bits may then be copied into input registers R0 100, R1 102, R2 104, R3 106, R4 108, R5 110, R6 112, and R7 114, creating 8 copies of the input data in a process called "expansion," facilitating parallel performance of computations which use the same bit. In the example of Figure 1, the 32 bit word sent from ARC 146 is copied serially into R0 100, R1 102, R2 104, R3 106, R4 108, R5 110, R6 112, and R7 114 so that each of these input registers contains an identical copy of the original 32 bit word. It should be understood that alternate implementations may comprise any number of input registers. The 8 input registers are then directly sensed, and the entire 256 bit matrix is output by the 8 input registers. This 256 bit output may be routed into the Butterfly and Inverse Butterfly Network 134 comprising Bfly 136, Reg 138, IBfly 140, and Reg 142. The butterfly and inverse butterfly network is programmed using ARM 144, an embedded system processor. The user may identify an algorithm or part of an algorithm, for example a single calculation, the user wishes the system to perform and load that algorithm or part of an algorithm onto ARM 144. As part of that loading process, specific bits or groups of bits, for example 1024 bits for a 1024 bit configuration memory, may be loaded into configuration memory Config 148 and/or Config 150, these bits corresponding to the algorithm the user will be running. Those bits will ultimately be read by either Bfly 136 (for bits in Config 148) or IBfly 138 (for bits in Config 150) to facilitate proper connection of pathways through the permuter circuit.

Once the 256 bit output from the 8 input registers is in the butterfly and inverse butterfly network, the system performs "diffusion" of the data. The butterfly and inverse butterfly network "permutes" the various bits, changing their locations within the registers based on how the user has configured the network to run the desired algorithm. In some implementations, this permutation of bits may be done in parallel. In some implementations, the 256 bit output may then be divided into bytes, 8 bit words. In other implementations, the output from the diffusion process may be divided into "nibbles," 4 bit words (as opposed to the 8 bit bytes).

The 32 byte output from the diffusion process then undergoes a process known as "confusion." Each of the 32 bytes is fed, in parallel with the other bytes, into Lookup Table 152. Lookup Table 152, like the butterfly and inverse butterfly network, is also programmed and loaded by ARM 144. Lookup Table 152 is loaded with the appropriate number of bits, for example 256 bits, and uses any 8-bit Boolean function to change each byte into one bit based on the Boolean function. These 32 computed bits are written to a single 32-bit register (in the case of 8-bit output from the BFLY/IBFLY permutation) which is then available to the ARM as the result of the desired computation. Alternatively, the system may route the 256 bit output from the 8 input registers down Fly Bypass Path 116 and then, one 32 bit word each, through output registers R8 118, R9 120, R10 122, R11 124, R12 126, R13 128, R14 130, and R15 132, for completion of a calculation. At this point, the process follows the same process as for the lookup table.

In some implementations, the butterfly and inverse butterfly network and the Lookup Table 152 may be used separately, in parallel. In these implementations, the initial input data load to undergo the confusion process via Lookup Table 152 is copied into alternate input registers R16 154, R17 156, R18 158, R19 160, R20 162, R21 164, R22 166 and R23 168. Then, data loaded onto these 8 alternate input registers is routed directly to Lookup Table 152 without undergoing diffusion in the butterfly and inverse butterfly network.

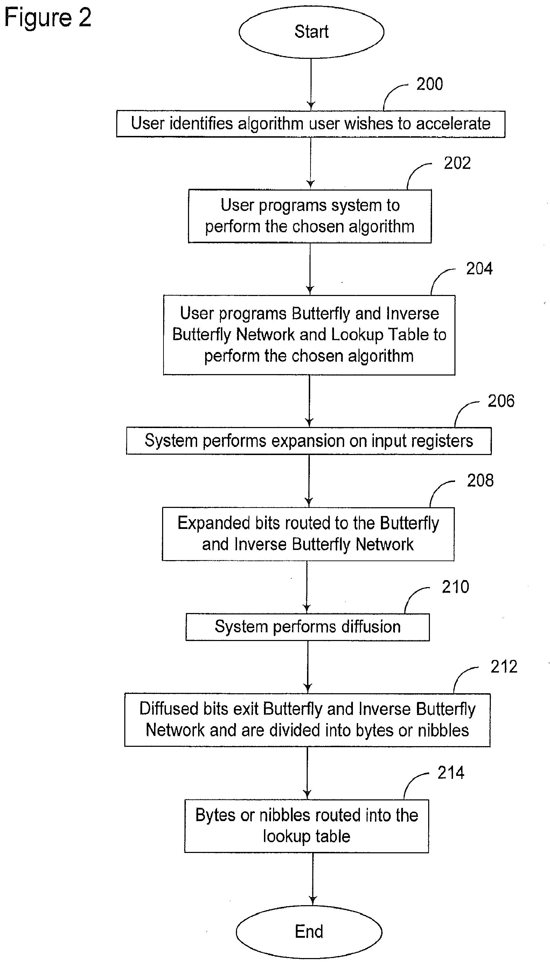

Figure 2 illustrates steps in an exemplary method for use of a programmable parallel computation and data manipulation accelerator in accordance with methods and systems consistent with the present invention. First, the user identifies a specific algorithm which the user wishes to accelerate (step 200). The user programs the system to perform the chosen algorithm through the system processors, for example by programming it into ARM 144 and ARC 146 of Figure 1 (step 202). Further, the user programs the Butterfly and Inverse Butterfly Network 134 and the Lookup Table 152, according to the algorithm the user desires to accelerate, using ARM 144 (step 204). The system performs the expansion process, copying the input data into the input registers, for example input registers R0 100, R1 102, R2 104, R3 106, R4 108, R5 110, R6 112, and R7 114 of Figure 1 (step 206). The expanded bits are routed to the system's Butterfly and Inverse Butterfly Network, for example Butterfly and Inverse Butterfly Network 134 of Figure 1 (step 208). In the system's Butterfly and Inverse Butterfly Network, the system performs diffusion on the data, permuting the various bits to different locations within the various input registers based on the programmed network configuration (step 210). The diffused data exits the system's Butterfly and Inverse Butterfly Network and is divided into either bytes or nibbles (step 212). Finally, these bytes or nibbles are routed into the system's lookup table, for example Lookup Table 152 of Figure 1 (step 214).

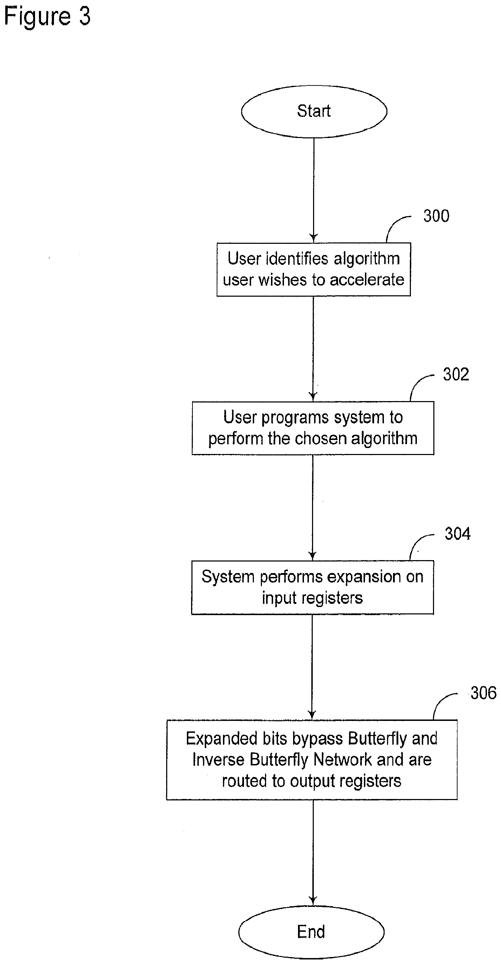

Figure 3 illustrates steps in an exemplary alternate method for use of programmable parallel computation and data manipulation accelerator in accordance with methods and systems consistent with the present invention. First, the user identifies a specific algorithm which the user wishes to accelerate (step 300). The user programs the system to perform the chosen algorithm through the system processors, for example by programming it into ARM 144 and ARC 146 of Figure 1 (step 302). The system performs the expansion process, copying the input data into the input registers, for example input registers R0 100, R1 102, R2 104, R3 106, R4 108, R5 110, R6 112, and R7 114 of Figure 1 (step 304). Finally, the expanded bits from the input registers bypass the system's Butterfly and Inverse Butterfly Network, for example via Fly Bypass Path 116 of Figure 1, and are routed to the system's output registers, for example output registers R8 118, R9 120, R10 122, R11 124, R12 126, R13 128, R14 130, and R15 132 (step 306).

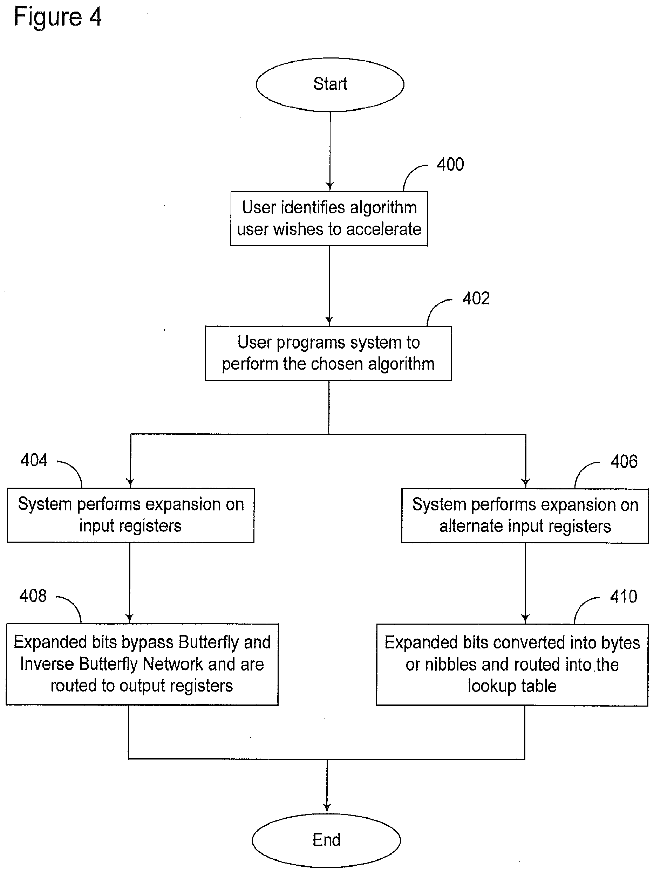

Figure 4 illustrates steps in an exemplary alternate method for use of a programmable parallel computation and data manipulation accelerator in accordance with methods and systems consistent with the present invention. First, the user identifies a specific algorithm which the user wishes to accelerate (step 400). In this implementation, the butterfly and inverse butterfly network and the lookup table may be used separately, which may provide for two different algorithms being accelerated at the same time or two different portions of the same algorithm being accelerated at essentially the same time. The user programs the system to perform the chosen algorithm through the system processors, for example by programming it into ARM 144 and ARC 146 of Figure 1 (step 402). The system performs expansion on the input registers, for example, input registers R0 100, R1 102, R2 104, R3 106, R4 108, R5 110, R6 112, and R7 114 of Figure 1 (step 404). Simultaneously, the system performs expansion on the alternate input registers, for example alternate input registers R16 154, R17 156, R18 158, R19 160, R20 162, R21 164, R22 166, and R23 168 of Figure 1 (step 406). The expanded bits from the input registers bypass the system's Butterfly and Inverse Butterfly Network, for example via Fly Bypass Path 116 of Figure 1, and are routed to the system's output registers, for example output registers R8 118, R9 120, R10 122, R11 124, R12 126, R13 128, R14 130, and R15 132 (step 408). Simultaneously, the expanded bits from the alternate input registers are converted into bytes or nibbles and routed into the system's lookup table, for example Lookup Table 152 of Figure 1 (step 410).

The foregoing description of various embodiments provides illustration and description, but is not intended to be exhaustive or to limit the invention to the precise form disclosed. Modifications and variations are possible in light of the above teachings or may be acquired from practice in accordance with the present invention. It is to be understood that the invention is intended to cover various modifications and equivalent arrangements included within the scope of the appended claims.

## Claims

1. A method for accelerating a calculation of multiple different cryptographic algorithms and/or portions thereof in a single data processing system using programmable parallel computation and data manipulation, comprising:
inputting data bits into multiple registers (R0 to R7) to make duplicate copies of the inputted data bits to be input to a butterfly network (134), so that an individual bit may be used in multiple calculations in parallel;
inputting the duplicate copies of the data bits into the butterfly network (134);
permuting the inputted data bits in the butterfly network (134) ;
outputting the permuted data bits from the butterfly network (134) to a look up table (152);
transforming the inputted permuted data bits in the look up table (152); and
outputting the transformed data bits from the look up table (152) ;
wherein the butterfly network (134) and the lookup table (152) are programmed by the user according to the algorithm the user desires to accelerate.

2. The method of claim 1, wherein the butterfly network (134) permutes the data bits based on the programming by the user.

3. The method of claim 1, wherein the butterfly network (134) is a butterfly and inverse butterfly network (134).

4. The method of claim 1, where the transformed data bits outputted from the look up table (152) are less bits than the inputted permuted data bits.

5. The method of claim 1, further comprising inputting 256 data bits into the butterfly network (134).

6. The method of claim 1, further comprising:
inputting 32 data bits into 8 registers (R0 to R7);
outputting 256 data bits from the 8 registers (R0 to R7); and
inputting the 256 data bits into the butterfly network (134) to be permuted by the butterfly network (134).

7. The method of claim 6, further comprising:
outputting 256 bits from the butterfly network (134) into the look up table (152); and
outputting 32 bits from the look up table (152).

8. A data processing system capable to accelerate a calculation of multiple different cryptographic protocols and/or portions thereof using programmable parallel computation and data manipulation, comprising:
a plurality of registers (R0 to R7) configured to:
input data bits to make duplicate copies of the data bits to be input to a butterfly network (134), so that an individual bit may be used in multiple calculations in parallel; and
output the duplicate copies of the data bits to a butterfly network (134);
the butterfly network (134) configured to:
input the duplicate copies of the data bits;
permute the inputted data bits in the butterfly network (134); and
output the permuted data bits from the butterfly network (134) to a look up table (152); and
the look up table (152) configured to:
input the permuted data bits from the butterfly network (134);
transform the inputted permuted data bits in the look up table (152); and
output the transformed data bits from the look up table (152);
wherein the butterfly network (134) and the lookup table (152) are configured to be programmed by the user according to the algorithm the user desires to accelerate.

9. The data processing system of claim 8, wherein the data processing system is an integrated circuit.

10. The data processing system of claim 8, further comprising a processor configured to program the butterfly network (134) to permute the data bits based on the algorithm the user desires to accelerate.

11. The data processing system of claim 8, wherein the butterfly network (134) is a butterfly and inverse butterfly network (134).

12. The data processing system of claim 8, wherein the transformed data bits outputted from the look up table (152) are less bits than the inputted permuted data bits.

13. The data processing system of claim 8, wherein the butterfly network (134) is configured to input 256 data bits.

14. The data processing system of claim 8, wherein the plurality of registers comprises 8 registers (R0 to R7) configured to input 32 data bits and output 256 data bits; and the butterfly network (134) is configured to input the 256 data bits to be permuted.

15. The data processing system of claim 14, wherein the butterfly network (134) is configured to output 256 bits to the look up table (152); and
the look up table (152) is configured to output 32 bits.

## Patentansprüche

1. Verfahren zum Beschleunigen einer Berechnung mehrerer verschiedener kryptographischer Algorithmen und/oder Teilen davon in einem einzelnen Datenverarbeitungssystem unter Verwendung programmierbarer paralleler Berechnung und Datenmanipulation, aufweisend:
Eingeben von Datenbits in mehrere Register (R0 bis R7), um Duplikate der eingegebenen Datenbits zu erstellen zum Eingegeben-Werden in ein Butterfly-Netzwerk (134), sodass ein einzelnes Bit in mehreren Berechnungen parallel verwendet werden kann;
Eingeben der Duplikate der Datenbits in das Butterfly-Netzwerk (134);
Permutieren der eingegebenen Datenbits in dem Butterfly-Netzwerk (134);
Ausgeben der permutierten Datenbits aus dem Butterfly-Netzwerk (134) an eine Nachschlagetabelle (152);
Umwandeln der eingegebenen permutierten Datenbits in der Nachschlagetabelle (152); und
Ausgeben der umgewandelten Datenbits aus der Nachschlagetabelle (152);
wobei das Butterfly-Netzwerk (134) und die Nachschlagetabelle (152) von dem Nutzer programmiert sind, gemäß dem Algorithmus, den der Nutzer beschleunigen will.

2. Das Verfahren gemäß Anspruch 1, wobei das Butterfly-Netzwerk (134) die Datenbits basierend auf der Programmierung durch den Nutzer permutiert.

3. Das Verfahren gemäß Anspruch 1, wobei das Butterfly-Netzwerk (134) ein Butterfly- und inverses Butterfly-Netzwerk (134) ist.

4. Das Verfahren gemäß Anspruch 1, wobei die umgewandelten Datenbits, die aus der Nachschlagetabelle (152) ausgegeben werden, weniger Bits sind als die eingegebenen permutierten Datenbits.

5. Das Verfahren gemäß Anspruch 1, ferner aufweisend das Eingeben von 265 Datenbits in das Butterfly-Netzwerk (134).

6. Das Verfahren gemäß Anspruch 1, ferner aufweisend:
Eingeben von 32 Datenbits in 8 Register (R0 bis R7);
Ausgeben von 256 Datenbits aus den 8 Registern (R0 bis R7); und
Eingeben der 256 Datenbits in das Butterfly-Netzwerk (134) zum Permutiert-Werden durch das Butterfly-Netzwerk (134).

7. Das Verfahren gemäß Anspruch 6, ferner aufweisend:
Ausgeben von 256 Bits aus dem Butterfly-Netzwerk (134) in die Nachschlagetabelle (152); und
Ausgeben von 32 Bits aus der Nachschlagetabelle (152).

8. Ein Datenverarbeitungssystem, das in der Lage ist eine Berechnung mehrerer verschiedener kryptographischer Protokolle und/oder Teilen davon zu beschleunigen unter Verwendung programmierbarer paralleler Berechnung und Datenmanipulation, aufweisend:
eine Mehrzahl von Registern (R0 bis R7), die eingerichtet sind zum:
Eingeben von Datenbits, um Duplikate der Datenbits zu erstellen zum Eingegeben-Werden in ein Butterfly-Netzwerk (134), sodass ein einzelnes Bit in mehreren Berechnungen parallel verwendet werden kann; und
Ausgeben der Duplikate der Datenbits an ein Butterfly-Netzwerk (134);
wobei das Butterfly-Netzwerk (134) eingerichtet ist zum:
Eingeben der Duplikate der Datenbits;
Permutieren der eingegebenen Datenbits in dem Butterfly-Netzwerk (134); und
Ausgeben der permutierten Datenbits aus dem Butterfly-Netzwerk (134) an eine Nachschlagetabelle (152); und
wobei die Nachschlagetabelle (152) eingerichtet ist zum:
Eingeben der permutierten Datenbits aus dem Butterfly-Netzwerk (134)
Umwandeln der eingegebenen permutierten Datenbits in der Nachschlagetabelle (152); und
Ausgeben der umgewandelten Datenbits aus der Nachschlagetabelle (152);
wobei das Butterfly-Netzwerk (134) und die Nachschlagetabelle (152) eingerichtet sind, um von dem Nutzer programmiert zu werden, gemäß dem Algorithmus, den der Nutzer beschleunigen will.

9. Das Datenverarbeitungssystem gemäß Anspruch 8, wobei das Datenverarbeitungssystem eine integrierte Schaltung ist.

10. Das Datenverarbeitungssystem gemäß Anspruch 8, ferner aufweisend einen Prozessor, der eingerichtet ist, um das Butterfly-Netzwerk (134) zu programmieren zum Permutieren der Datenbits, basierend auf dem Algorithmus, den der Nutzer beschleunigen will.

11. Das Datenverarbeitungssystem gemäß Anspruch 8, wobei das Butterfly-Netzwerk (134) ein Butterfly- und ein inverses Butterfly-Netzwerk (134) ist.

12. Das Datenverarbeitungssystem gemäß Anspruch 8, wobei die umgewandelten Datenbits, die aus der Nachschlagetabelle (152) ausgegeben werden, weniger Bits sind als die eingegebenen permutierten Datenbits.

13. Das Datenverarbeitungssystem gemäß Anspruch 8, wobei das Butterfly-Netzwerk (134) eingerichtet ist, um 256 Datenbits einzugeben.

14. Das Datenverarbeitungssystem gemäß Anspruch 8, wobei die Mehrzahl von Registern 8 Register (R0 bis R7) aufweist, die eingerichtet sind, um 32 Datenbits einzugeben und 256 Datenbits auszugeben; und
das Butterfly-Netzwerk (134) eingerichtet ist, um die 256 zu permutierenden Datenbits einzugeben.

15. Das Datenverarbeitungssystem gemäß Anspruch 14, wobei das Butterfly-Netzwerk (134) eingerichtet ist, um 256 Bits an die Nachschlagetabelle (152) auszugeben; und
die Nachschlagetabelle (152) eingerichtet ist, um 32 Bits auszugeben.

## Revendications

1. Procédé pour accélérer un calcul de multiples algorithmes cryptographiques différents, et/ou de parties de ceux-ci, dans un unique système de traitement de données, en utilisant un calcul parallèle programmable et une manipulation de données, comprenant les étapes ci-dessous consistant à :
appliquer en entrée des bits de données dans de multiples registres (R0 à R7) en vue de réaliser des copies en double des bits de données appliqués en entrée à appliquer en entrée dans un réseau de type papillon (134), de sorte qu'un bit individuel peut être utilisé dans de multiples calculs en parallèle ;
appliquer en entrée les copies en double des bits de données dans le réseau de type papillon (134) ;
permuter les bits de données appliqués en entrée dans le réseau de type papillon (134) ;
fournir en sortie les bits de données permutés, du réseau de type papillon (134) à une table de recherche (152) ;
transformer les bits de données permutés appliqués en entrée dans la table de recherche (152) ; et
fournir en sortie les bits de données transformés, à partir de la table de recherche (152) ;
dans lequel le réseau de type papillon (134) et la table de recherche (152) sont programmés par l'utilisateur selon l'algorithme que l'utilisateur souhaite accélérer.

2. Procédé selon la revendication 1, dans lequel le réseau de type papillon (134) permute les bits de données sur la base de la programmation par l'utilisateur.

3. Procédé selon la revendication 1, dans lequel le réseau de type papillon (134) est un réseau de type papillon et papillon inverse (134).

4. Procédé selon la revendication 1, dans lequel les bits de données transformés fournis en sortie de la table de recherche (152) sont inférieurs en nombre aux bits de données permutés appliqués en entrée.

5. Procédé selon la revendication 1, comprenant en outre l'étape consistant à appliquer en entrée 256 bits de données dans le réseau de type papillon (134).

6. Procédé selon la revendication 1, comprenant en outre les étapes ci-dessous consistant à :
appliquer en entrée 32 bits de données dans 8 registres (R0 à R7) ;
fournir en sortie 256 bits de données à partir des 8 registres (R0 à R7) ; et
appliquer en entrée les 256 bits de données dans le réseau de type papillon (134) en vue de leur permutation par le réseau de type papillon (134).

7. Procédé selon la revendication 6, comprenant en outre les étapes ci-dessous consistant à :
fournir en sortie 256 bits du réseau de type papillon (134) à la table de recherche (152) ; et
fournir en sortie 32 bits à partir de la table de recherche (152).

8. Système de traitement de données apte à accélérer un calcul de multiples algorithmes cryptographiques différents, et/ou de parties de ceux-ci, en utilisant un calcul parallèle programmable et une manipulation de données, comprenant :
une pluralité de registres (R0 à R7) configurés de manière à :
appliquer en entrée des bits de données en vue de réaliser des copies en double des bits de données à appliquer en entrée dans un réseau de type papillon (134), de sorte qu'un bit individuel peut être utilisé dans de multiples calculs en parallèle ;
fournir en sortie les copies en double des bits de données à un réseau de type papillon (134) ;
le réseau de type papillon (134) étant configuré de manière à :
appliquer en entrée les copies en double des bits de données ;
permuter les bits de données appliqués en entrée dans le réseau de type papillon (134) ; et
fournir en sortie les bits de données permutés, du réseau de type papillon (134) à une table de recherche (152) ;
la table de recherche (152) étant configurée de manière à :
appliquer en entrée les bits de données permutés à partir du réseau de type papillon (134) ;
transformer les bits de données permutés appliqués en entrée dans la table de recherche (152) ; et
fournir en sortie les bits de données transformés, à partir de la table de recherche (152) ;
dans lequel le réseau de type papillon (134) et la table de recherche (152) sont configurés de manière à être programmés par l'utilisateur selon l'algorithme que l'utilisateur souhaite accélérer.

9. Système de traitement de données selon la revendication 8, dans lequel le système de traitement de données est un circuit intégré.

10. Système de traitement de données selon la revendication 8, comprenant en outre un processeur configuré de manière à programmer le réseau de type papillon (134) afin qu'il permute les bits de données sur la base de l'algorithme que l'utilisateur souhaite accélérer.

11. Système de traitement de données selon la revendication 8, dans lequel le réseau de type papillon (134) est un réseau de type papillon et papillon inverse (134).

12. Système de traitement de données selon la revendication 8, dans lequel les bits de données transformés fournis en sortie de la table de recherche (152) sont inférieurs en nombre aux bits de données permutés appliqués en entrée.

13. Système de traitement de données selon la revendication 8, dans lequel le réseau de type papillon (134) est configuré de manière à appliquer en entrée 256 bits de données.

14. Système de traitement de données selon la revendication 8, dans lequel la pluralité de registres comprend 8 registres (R0 à R7) configurés de manière à appliquer en entrée 32 bits de données et à fournir en sortie 256 bits de données ; et le réseau de type papillon (134) est configuré de manière à appliquer en entrée les 256 bits de données à permuter.

15. Système de traitement de données selon la revendication 14, dans lequel le réseau de type papillon (134) est configuré de manière à fournir en sortie 256 bits à la table de recherche (152) ; et
la table de recherche (152) est configurée de manière à fournir en sortie 32 bits.
